## Europäisches Patentamt
## European Patent Office
## Office européen des brevets

(11) Veröffentlichungsnummer: **0 387 664 B1**

(12)
# EUROPÄISCHE PATENTSCHRIFT

(45) Veröffentlichungstag der Patentschrift: **21.12.94**

(21) Anmeldenummer: **90104258.0**

(22) Anmeldetag: **06.03.90**

(51) Int. Cl.5: **C08F 265/04**, C08F 2/22,
C09D 5/00, C09D 151/00

(54) Wässrige Kunststoffdispersion, Verfahren zu ihrer Herstellung und Anwendung.

(30) Priorität: **16.03.89 DE 3908615**

(43) Veröffentlichungstag der Anmeldung:
**19.09.90 Patentblatt 90/38**

(45) Bekanntmachung des Hinweises auf die
Patenterteilung:
**21.12.94 Patentblatt 94/51**

(84) Benannte Vertragsstaaten:
**AT BE CH DE DK ES FR GB IT LI NL SE**

(56) Entgegenhaltungen:
**EP-A- 0 219 868**
**DE-A- 2 550 772**
**US-A- 4 181 769**

(73) Patentinhaber: **RÖHM GMBH**
**Kirschenallee**
**D-64293 Darmstadt (DE)**

(72) Erfinder: **Klesse, Wolfgang, Dr.**
**Tucholskyweg 47**
**D-6500 Mainz 31 (DE)**
Erfinder: **Elser, Wilhelm**
**Am Sportfeld 1**
**D-6103 Griesheim (DE)**
Erfinder: **Mager, Theodor**
**Ödenburger Strasse 54**
**D-6100 Darmstadt (DE)**
Erfinder: **Christner, Jürgen, Dr.**
**Tannenstrasse 7B**
**D-6104 Seeheim-Jugenheim (DE)**
Erfinder: **Krauss, Hertha**
**Karl-Marx Strasse 33**
**D-6102 Pfungstadt (DE)**
Erfinder: **Rossberg, Peter, Dr.**
**Eckweg 1**
**D-6104 Seeheim-Jugenheim (DE)**
Erfinder: **Weber, Marliese**
**Im Taubhaus 7**
**D-6074 Rödermark (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft eine wäßrige Kunststoffdispersion, die zu Filmen mit hoher Dehnbarkeit auch bei tiefen Temperaturen, aber vergleichsweise geringer Klebrigkeit auftrocknet. Weiterhin betrifft die Erfindung die Anwendung der neuen Kunststoffdispersion als Bindemittel von Überzugsmitteln, insbesondere Fassadenfarben und Lederbeschichtungsmittel, sowie Verfahren zu ihrer Herstellung. Charakteristisch für die Kunststoffdispersion ist eine Mindestfilmbildungstemperatur unter 50°C, sowie der Gehalt eines Emulsionspolymerisats mit schalenförmigem Aufbau.

Stand der Technik

Emulsionspolymerisate mit schalenförmigem Aufbau sind bekannt. Nach US-A 4 107 120 besteht ein zum Verfestigen von Textilien geeigneter Latex aus einem schalenförmig aufgebauten Emulsionspolymerisat, dessen Kern 30 bis 60 und dessen Schale 70 bis 40 Gew.-% ausmachen. Der Kern besteht aus einem vernetzten Polymerisat mit einer Glasübergangstemperatur unter -20°C. Das Schalenpolymer hat eine Glasübergangstemperatur zwischen -10 und 60°C und ist über ein latentes Vernetzungssystem mit dem Kernmaterial verbunden. Die Vernetzung kommt beim Erhitzen eines aus der Dispersion gebildeten Films durch Umsetzung von Acrylamid-Einheiten im Kernpolymerisat mit N-Methylolacrylamid-Einheiten im Schalenmaterial zustande. Die starke Vernetzung führt zu einer verhältnismäßig geringen Dehnbarkeit.

Ein weiteres Anwendungsgebiet von Kunststoffdispersionen sind Bindemittel für wäßrige Anstrichfarben, beispielsweise Fassaden- und Armierungsfarben (vgl. E. Bagda u. H. Rusam, "Rißüberbrackende Beschichtungen", Bautenschutz und Bausanierung, 4/1981, S.133-138). Für Armierungsfarben werden u.a. Bindemittel verwendet, die aus einem sehr weichen Emulsionspolymerisat und einem untergeordneten Anteil an mehrfach ungesättigten Monomeren bestehen, die durch UV-Strahlung aktivierbar sind. Unter dem Einfluß des Tageslichtes entsteht allmählich an der Oberfläche des getrockneten Polymerisatfilmes eine dünne Haut aus einem vernetzten und daher nicht klebrigen Polymerisat, die die Dehnbarkeit des Films solange nicht beeinträchtigt, wie die lichtinduzierte Vernetzung nicht tiefer ins Innere des Film fortschreitet. Es wird jedoch als nachteilig empfunden, daß die Klebrigkeit der Filmoberfläche erst allmählich, in Abhängigkeit von den Lichtverhältnissen verschwindet.

Aufgabe und Lösung

Der Erfindung liegt die Aufgabe zugrunde, ein physikalisch trocknendes Bindemittel in Form einer wäßrigen Kunststoffdispersion zu schaffen, die bei niedrigen Temperaturen physikalisch zu hoch elastischen, von Anfang an wenig oder nicht klebrigen Filmen auftrocknet.

Die Lösung der Aufgabe wurde in den Emulsionspolymerisaten gemäß den Patentansprüchen gefunden. Die Bezeichnung der beteiligten Polymerisatphasen als Kernmaterial und Schalenmaterial bedeutet nicht, daß die Erfindung auf eine bestimmte Morphologie der Latexteilchen festgelegt sein sollte. Unter einer Polymerisatphase wird dabei ein Anteil des Emulsionspolymerisats verstanden, der in einem zeitlich begrenzten Abschnitt der Emulsionspolymerisation erzeugt wird und dessen Zusammensetzung sich von der der vorausgehenden bzw. nachfolgenden Phase unterscheidet. Man spricht auch von Mehrstufen-Emulsionspolymerisation oder Pfropfpolymerisation. Die Phasen können in jedem Latexteilchen einen kugelförmigen Kern und eine den Kern umgebende Schale bilden, jedoch ist eine solcher Aufbau für die erfindungsgemäßen Emulsionspolymerisate nicht erwiesen. Es wird jedoch angenommen, daß die Phasen auf jeden Fall räumlich von einander geschiedene, aber einander berührende und gegebenenfalls durch chemische Bindungen miteinander verknüpfte Domänen bilden.

Der zweiphasige Aufbau der Latexteilchen hat jedenfalls einen wesentlichen Einfluß auf die Eigenschaften des Films, der sich beim Eintrocknen der Kunststoffdispersion bildet. Die hohe Dehnbarkeit des Films beruht auf der weichen, schwach vernetzten Struktur des Kernmaterials. Sie kommt durch den Gehalt an vernetzenden Monomeren und die Glasübergangstemperatur unter 0°C, vorzugsweise unter -20°C, zum Ausdruck. Ein begrenzter Gehalt von etwa 5 bis zu 20 Gew.-% des Kernmaterials an hartmachenden Monomereinheiten, wie Methylmethacrylat oder Acrylnitril, wirkt sich günstig auf die Dehnbarkeit aus. Das Kernmaterial muß einen wesentlichen Anteil des Emulsionspolymerisats bilden, nämlich 65 bis 90 Gew.-%.

Unter der Voraussetzung, daß das Schalenmodell morphologisch zutrifft, bildet das Schalenmaterial entsprechend seinem Anteil von 10 bis 35 Gew.-% des Emulsionspolymerisats eine verhältnismäßig dünne Schale um den Kern; der Radius des Kerns, gemessen am Radius des ganzen Latexteilchens, beträgt zwischen 80 und 95 %.

Das Schalenmaterial ist im wesentlichen unvernetzt. Jedenfalls muß der Anteil an mehrfunktionellen Monomereinheiten - auch wenn sie als Verunreinigung in anderen Monomeren enthalten waren - so gering sein, daß die Dehnbarkeit eines aus der Kunststoffdispersion gebildeten Films 150 % (nach DIN 53 455) nicht unterschreitet. Das Schalenmaterial darf nur eine begrenzte Härte haben, ausgedrückt durch eine Glasübergangstemperatur unter 60 ° C, vorzugsweise -20 bis 40 ° C. Die Glasübergangstemperatur muß aber mindestens 10 K über derjenigen des Kernmaterials liegen. Vorzugsweise beträgt die Differenz 20 bis 60 K, insbesondere 20 bis 40 K. Ist das Schalenmaterial zu weich, d.h. seine Glasübergangstemperatur zu niedrig, so bleibt der Film zwar elastisch, ist aber klebrig. Ist es zu hart, d.h. die Glasübergangstemperatur zu hoch, so geht die Dehnbarkeit stark zurück. Nur in dem beanspruchten Bereich wird die angestrebte vorteilhafte Eigenschaftskombination von hoher Dehnbarkeit und geringer Klebrigkeit erreicht.

Anwendung

Die genannten Filmeigenschaften machen die erfindungsgemäßen Kunststoffdispersionen besonders geeignet als Bindemittel für nicht blockende Überzüge auf nicht starren Untergründen. Dazu zählen einerseits flexible Substrate, wie Leder, Kunststoffolien, dünne Metallbleche und Textilien, andererseits an sich starre, aber durch Risse unterbrochene Substrate, bei denen Verschiebungen der Bruchstücke gegeneinander auftreten können. Anstrichfarben für Substrate der letztgenannten Art werden als Armierungsfarben bezeichnet und im Bausektor zur Beschichtung von rissigem Putz oder Mauerwerk verwendet. Bei starker Rissigkeit können der Farbschicht zur Verbesserung ihres Zusammenhalts Fasern oder Gewebe eingelagert werden.

Bisher wurden physikalisch trocknende Armierungsanstriche meistens mehrschichtig aufgebaut. Eine elastische Grundschicht gewährleistet die Überbrückung von Rissen; eine darüber aufgebrachte Schicht mit einem härteren Bindemittel beseitigt die Klebrigkeit der Oberfläche der Grundschicht. Die Kunststoffdispersionen gemäß der Erfindung gestatten es, einen flexiblen, nicht klebrigen Anstrich in einem Arbeitsgang aufzubringen.

Ausführung der Erfindung

Als monoäthylenisch ungesättigte, radikalisch polymerisierbare Monomere, deren Homopoymerisate eine Glasübergangstemperatur unter 25 ° C haben, werden vorzugsweise Alkylester der Acrylsäure mit 1 bis 12, vorzugsweise 2 bis 8 Kohlenstoffatomen im Alkylrest verwendet. n-Butylacrylat und 2-Ethylhexylacrylat sind die technisch wichtigsten weichmachenden Monomeren dieser Gruppe. Alkylester der Methacrylsäure, die Alkylreste mit mehr als 4 Kohlenstoffatomen enthalten, und Vinylalkyläther mit 2 bis 12 Kohlenstoffatomen im Alkylrest sind gleichfalls geeignet.

Als Comonomere, deren Homopolymerisate eine Glasübergangstemperatur über 25 ° C haben, können in den Emulsionspolymerisaten des Kern- und des Schalenmaterials hartmachende Monomere, wie Alkylester der Methacrylsäure mit 1 bis 3 Kohlenstoffatomen im Alkylrest, Acryl- und/oder Methacrylnitril, Styrol, alpha-Methylstyrol, Vinylacetat, Vinylchlorid oder Vinylidenchlorid, enthalten sein. Ungesättigte Carbonsäuren, wie Acryl-, Methacryl- oder Itakonsäure, Hydroxyalkylester der Acryl- und/oder Methacrylsäure, Acryl- und/oder Methacrylamide und/oder deren N-Alkylderivate können am Aufbau des Kernmaterials bis zu 15 Gew.-%, vorzugsweise zu 0,1 bis 5 Gew.-% beteiligt sein. Das Schalenmaterial kann bis zu 20 Gew.-%, vorzugsweise 1 bis 10 Gew.-%, an polaren Monomeren aus der Gruppe der ungesättigten Carbonsäuren und der Hydroxyalkylester der Acryl- und/oder Methacrylsäure enthalten. Besonders bevorzugt sind Acryl-, Methacryl- und Itakonsäure. Diese polaren Monomeren müssen nicht notwendigerweise gleichmäßig auf das gesamte Schalenmaterial verteilt sein. Es kann vorteilhaft sein, diese Monomeren in entsprechend höherer Konzentration in einen Teil des Schalenmaterials einzubauen. In diesem Fall werden die polaren Monomeren überwiegend oder ganz in den zuletzt gebildeten Teil des Schalenmaterials eingebaut.

Der Anteil dieser Comonomeren wird so bemessen, daß das entstehende Mischpolymerisat jeweils die geforderte Glasübergangstemperatur hat und die Differenz der Glasübergangstemperaturen des Kern- und des Schalenmaterials mindestens 10 K beträgt.

Die Glasübergangstemperatur ($t_{G,M}$) der Mischpolymerisate läßt sich mit hinreichender Genauigkeit aus den Glasübergangstemperaturen ($t_{G;i}$) der Homopolymerisate der beteiligten Monomeren nach der Formel

$$1/t_{G,M} = a/t_{G1} + b/t_{G2} + ...$$

errechnen, worin a und b die relativen Anteile der Monomeren 1 und 2 sind.

Beispiele vernetzender Monomere, die wenigstens zwei äthylenisch ungesättigte, radikalisch polymerisierbare Gruppen im Molekül enthalten, sind Di- und Polyester der Acryl- und/oder Methacrylsäure mit zwei- oder mehrwertigen Alkoholen, wie Ethylenglykol-diacrylat und -methacrylat, Butylenglykol-diacrylat und -methacrylat, Pentaerythrittri- oder -tetraacrylat und -methacrylat, Trimethylolpropan-triacrylat und -methacrylat, Allylacrylat und -methacrylat und Triallylcyanurat. In manchen Fällen sind pfropfvernetzende Monomere, die wenigstens zwei äthylenisch ungesättigte, radikalisch polymerisierbare Gruppen und darunter wenigstens eine Allylgruppe enthalten, besonders vorteilhaft.

Vernetzende Monomere sind im allgemeinen am Aufbau des Kernmaterials in einer Menge von 0,1 bis 2, vorzugsweise 0,2 bis 0,6 Gew.-%, beteiligt. Die Vernetzung wird gerade so hoch gewählt, daß die Dehnbarkeit des Polymerisatfilms im Vergleich zu einem entsprechenden unvernetzten Emulsionspolymerisat nur wenig vermindert, aber die Blockfestigkeit schon ausreichend hoch ist. Vorzugsweise wird der Anteil an vernetzenden Monomeren so begrenzt, daß die Dehnbarkeit eines aus der Kunststoffdispersion erzeugten Films mindestens 150 % (nach DIN 53 455), vorzugsweise mindestens 400 % und insbesondere mehr als 600 % beträgt. Im Einzelfall richtet sich die Stärke der Vernetzung nach der vorgesehenen Anwendung. So wird bei Armierungsfarben auf eine sehr hohe Filmdehnbarkeit, beispielsweise um 100 bis 500 % noch bei -10°C, Wert gelegt, während die Oberfläche bei Temperaturen bis zu 30°C gerade so wenig klebrig sein soll, daß Staub und Schmutz nicht haften. Dafür genügt ein niedriger Anteil der vernetzenden Monomeren. Bei Farben für die Lederzurichtung wird eine höhere Blockfestigkeit verlangt und dafür eine etwas geringere Dehnbarkeit, mindestens jedoch 150 %, in Kauf genommen; in diesem Fall kann der Vernetzeranteil im oberen Teil des beanspruchten Bereiches liegen. Gleichzeitig wird das Schalenmaterial härter eingestellt.

Herstellung der Emulsionspolymerisate

Das Emulsionspolymerisat kann nach üblichen Verfahren der Emulsionspolymerisation in wäßriger Phase in Gegenwart von wasserlöslichen, anionischen, kationischen oder nichtionischen Emulgiermitteln oder von Schutzkolloiden und von radikalbildenden Initiatoren, wie Alkaliperoxodisulfaten, bei Temperaturen von 20 bis 100°C hergestellt werden. Das Gemisch der Monomeren zur Bildung des Kernmaterials kann vor Beginn der Polymerisation in der wäßrigen Phase emulgiert oder vorzugsweise im Laufe der Polymerisation allmählich nach Maßgabe des Umsatzes zu der vorgelegten Wasserphase zugesetzt werden. In entsprechender Weise wird das Schalenmaterial in einer zweiten Stufe der Emulsionspolymerisation in Gegenwart des zuvor erzeugten Latex des Kernmaterials hergestellt.

Vorzugsweise wird das Herstellungsverfahren in der Weise ausgeführt, daß man das Monomerengemisch der ersten Stufe, das gegebenenfalls in Wasser emulgiert sein kann, unter Polymerisationsbedingungen zu einer Wasserphase, die ein Emulgiermittel und einen radikalbildenden Initiator enthält, zulaufen läßt und in der zweiten Stufe zu dem entstandenen Latex weiterhin unter Polymerisationsbedingungen das zweite Monomerengemisch, das ebenfalls in Wasser emulgiert sein kann, zulaufen läßt. Bei dieser Arbeitsweise wird als Vernetzungsmittel in der ersten Stufe 0,1 bis 2, bevorzugt 0,2 bis 1, insbesondere 0,2 bis 0,6 Gew.-% eines pfropfvernetzenden Monomers, das wenigstens zwei äthylenisch ungesättigte, radikalisch polymerisierbare Gruppen und darunter wenigstens eine Allylgruppen enthält, vorzugsweise Allylacrylat oder -methacrylat, verwendet.

Das Molekulargewicht des Kernmaterials ist infolge der Vernetzung in der Regel unbestimmbar hoch, während das des unvernetzten Schalenmaterials meist im Bereich von 50 000 bis 5 Millionen liegt. Die Kunststoffdispersion wird üblicherweise mit einem Feststoffgehalt von 30 bis 65 Gew.-% hergestellt und zur Anwendung gewünschtenfalls mit Wasser verdünnt. Der pH-Wert kann bei 2 bis 10 liegen und beträgt meistens 6 bis 9,5.

In der Regel enthält die Kunststoffdispersion Latexteilchen mit einem Durchmesser von 40 bis 1500 nm. Der bevorzugte Bereich liegt zwischen 100 und 800 nm, insbesonderen 100 bis 500 nm. Die Teilchengrößenverteilung kann unimodal, bimodal oder polymodal sein. Dispersionen mit bi- oder polymodaler Teilchengrößenverteilung sind nach dem in DE-C 31 47 008 beschriebenen Verfahren herstellbar.

Zur Herstellung von Überzugsmitteln können der Kunststoffdispersion in bekannter Weise übliche Mengen an Pigmenten, Füllstoffen, Verlaufmitteln, Verdickungsmitteln, Stabilisierungsmitteln und dergl. zugesetzt werden.

BEISPIELE

Herstellung der erfindungsgemäßen Kunststoffdispersionen

In einem Witt'schen Topf mit einem Fassungsvermögen von 2 bzw. 6 l mit aufgesetztem Rückflußkühler, Ruhrwerk und Zulaufgefäß wird eine wäßrige Losung eines anionischen Emulgators vorgelegt und auf 80 °C erwärmt. Als anionischer Emulgator (A) wird das Natriumsalz des Triisobutylphenolpolyglykolethersulfats mit einem Ethoxylierungsgrad von 7 eingesetzt. Nach Zusatz von Ammoniumperoxodisulfat (APS) als Initiator werden die Monomeremulsionen I und II nacheinander innerhalb von 4 Stunden gleichmäßig zudosiert. Die entstandene Kunststoffdispersion wird anschließend mit wäßrigem Ammoniak auf pH 7,0 eingestellt und bei 50 °C mit nichtionischen Emulgatoren in Form einer 35-prozentigen wäßrigen Lösung versetzt. Als solcher wird entweder Isononylphenol-polyglykolether mit einem Ethoxylierungsgrad von 50 (B) oder ein Gemisch (C) aus zwei Nonylphenolpolyglykolethern mit Ethoxylierungsgraden von 9 und 100 im Verhältnis 75 : 25 oder Octylphenol-polyglykolether mit einem Ethoxylierungsgrad von 16 (D) verwendet. Nach Abkühlen auf Raumtemperatur wird mit wäßrigem Ammoniak auf pH 9 eingestellt.

Die Zusammensetzungen der Vorlage und der Emulsionen I und II sind für die Beispiele 1 bis 18 in Tabelle 1 angegeben. Tabelle 2 enthält die prozentuale Zusammensetzung des Kern- und Schalenmaterials und deren Gewichtsverhältnisse. Die Mindestfilmbildungstemperaturen aller Dispersionen liegen beim Frostpunkt, d.h. 0 °C. Alle weiteren physikalischen Daten und die Ergebnisse der anwendungstechnischen Prüfung der Kunststoffdispersionen gemäß den Beispielen 1 bis 16 sind in Tabelle 3 enthalten.

Beispiel 16

Das Verfahren dieses Beispiels weicht von der oben beschriebenen allgemeinen Arbeitsweise insofern ab, als in die Vorlage zusätzlich 2 g eines 30 %igen Saatlatex mit einem mittleren Teilchendurchmesser von 40 nm zugesetzt wird, dessen Polymerisatteilchen aus BA, MMA und MAS (53 : 46 : 1 Gew.-T.) aufgebaut ist. 70 min nach Beginn des Zulaufs der Emulsion II werden nochmals 20 g des gleichen Saatlatex zugesetzt. Es entsteht eine bimodale Dispersion, die 25 Gew.-% Teilchen mit einem mittleren Durchmesser von 125 nm und 75 Gew.-% Teilchen mit einem mittleren Durchmesser von 400 nm enthält.

Beispiel 18

Bei diesem Beispiel wird das Schalenmaterial in zwei Stufen erzeugt. Die Emulsion II wird im Gewichtsverhältnis 25 : 5 in zwei Teile aufgeteilt, von denen der erste 5 und der zweite 15 Gew.-% Methacrylsäure enthält. In den Tabellen 1 und 2 werden die beiden Teile der Emulsion II in zwei Zeilen angegeben.

Durch Trocknen einer dünnen schicht der Dispersion wurde ein Film hergestellt, an dem eine Zug-Dehnungs-Messung nach DIN 53 455 vorgenommen wurde. Die Reißdehnung beträgt 490 %, die Reißspannung 6,6 MPa. Der Blockupnkt des Films liegt bei 30 °C.

TABELLE 1: Zusammensetzung der Polymerisationsansätze (in Gewichtsteilen)

1. Teil

| Beisp. Nr. | Vorlage | | | Emulsion I | | Vernetz | Emulg. Typ A | MAS | W | Emulsion II | | MAS | Emulg. Typ A | APS | W | Stabilisierung Emulg. | |
| | Emulg. Typ A | APS | W | BA | Comon. | | | | | BA | MMA | | | | | Menge | Typ |
|---|---|---|---|---|---|---|---|---|---|---|---|---|---|---|---|---|---|
| 1 | 0,4 | 0,5 | 400 | 690 | - | 7,0 TAC | 2,1 | 3,5 | 427 | 171 | 120 | 9 | 0,9 | 0,5 | 183 | 35 | C |
| 2 | 0,4 | 0,5 | 400 | 695 | - | 1,4 AL | 1,47 | 3,5 | 400 | 171 | 120 | 9 | 0,63 | 0,5 | 171 | 35 | B |
| 3 | 1,2 | 1,5 | 1200 | 2083 | - | 6,3 AL | 4,41 | 10,5 | 1197 | 513 | 360 | 27 | 1,89 | 1,5 | 513 | 105 | B |
| 4 | 0,4 | 0,5 | 400 | 692 | - | 4,2 AL | 1,47 | 3,5 | 400 | 171 | 120 | 9 | 0,63 | 0,5 | 171 | 35 | B |
| 5 | 0,4 | 0,5 | 400 | 690 | - | 7,0 AL | 1,47 | 3,5 | 400 | 171 | 120 | 9 | 0,63 | 0,5 | 171 | 35 | B |
| 6 | 0,4 | 0,5 | 400 | 794 | ·- | 2,4 AL | 2,4 | 4,0 | 485 | 114 | 80 | 6 | 0,6 | 0,5 | 121 | 35 | C |
| 7 | 1,0 | 1,25 | 1000 | 1736 | - | 5,25 AL | 5,25 | 8,8 | 1073 | 427 | 300 | 23 | 2,25 | 1,3 | 460 | 88 | C |
| 8 | 0,4 | 0,5 | 400 | 645 | - | 1,95 AL | 1,95 | 3,3 | 394 | 200 | 140 | 11 | 1,05 | 0,5 | 212 | 35 | C |
| 9 | 0,4 | 0,5 | 400 | 794 | - | 2,4 AL | 2,4 | 4,0 | 485 | 130 | 70 | 4 | 0,6 | 0,5 | 121 | 35 | C |

* Abweichendes Verfahren, siehe besondere Beschreibung

Bedeutung der Abkürzungen:

Emulg: Menge und Typ des Emulgators

APS: Ammoniumperoxodisulfat; W: Wasser ; BA: n-Butylacrylat; MMA: Methylmethacrylat

MAS: Methacrylsäure, Vernetz: Menge und Art des Vernetzungsmittels; TAC: Triallylcyanurat;

AL: Allylmethacrylat; Comon: Menge und Art des Comonomers, AN: Acrylnitril

EA: Ethylacrylat

Emulgator Typ A: Triisobutylphenol-7 EO, sulfatiert, Na-Salz

Emulgator Typ B: Isononylphenol-50 EO,

Emulgator Typ C: Nonylphenol- 9 EO/ 100 EO, Mischungsverhältnis 75 : 25

Emulgator Typ D: Octylphenol-16 EO

EP 0 387 664 B1

TABELLE 1:   Zusammensetzung der Polymerisationsansätze (in Gewichtsteilen)

2. Teil

| Beisp. Nr. | Vorlage Emulg. Typ A | APS | W | Emulsion I BA | Comon. | Vernetz | Emulg. Typ A | MAS | W | Emulsion II BA | MMA | MAS | Emulg. Typ A | APS | W | Stabilisierung Emulg. Menge | Typ |
|---|---|---|---|---|---|---|---|---|---|---|---|---|---|---|---|---|---|
| 10 | 0,4 | 0,5 | 400 | 554 | 240 MMA | 2,4 AL | 2,4 | 4,0 | 485 | 130 | 66 | 4 | 0,6 | 0,5 | 121 | 35 | C |
| 11 | 0,4 | 0,5 | 400 | 741 | 132 MMA | 2,4 AL | 2,4 | 4,0 | 485 | 130 | 66 | 4 | 0,6 | 0,5 | 121 | 35 | C |
| 12 | 0,4 | 0,5 | 400 | 694 | – | 2,1 AL | 2,1 | 3,5 | 427 | 195 | 96 | 9 | 0,9 | 0,5 | 183 | 35 | C |
| 13 | 0,4 | 0,5 | 400 | 694 | – | 2,1 AL | 2,1 | 3,5 | 427 | 210 | 81 | 9 | 0,9 | 0,5 | 183 | 35 | C |
| 14 | 0,4 | 2,0 | 400 | 746 | 48 AN | 2,4 AL | 2,4 | 4,0 | 488 | 130 | 66 | 4 | 0,6 | 0,8 | 122 | 35 | C |
| 15 | 0,12 | 1,0 | 785 | 2020 | 360 MMA | 7,2 AL | 4,8 | 12,8 | 956 | 390 | 198 | 12 | 1,2 | 1,0 | 242 | 70 | C |
| 16* | 0,04 | 0,4 | 320 | 808 | 144 MMA | 2,9 AL | 1,53 | 4,8 | 369 | 156 | 79 | 5 | 0,38 | 0,4 | 92 | 28 | C |
| 17 | 1,08 | 0,54 | 423 | – | 500 EA | 1,52 AL | 3,03 | 2,5 | 472 | 97,2 EA | 112 | 6,5 | 1,3 | 0,1 | 202 | 23 | D |
| 18* | 1,08 | 0,54 | 432 | 372 | 124 MMA | 5,04 AL | 3,1 | 2,5 | 459 | 63,5 | 108 | 9 | 1,08 | 0,1 | 163 | – | – |
|  |  |  |  |  |  |  |  |  |  | 12,6 | 18 | 5,4 | 0,2 | 0,02 | 32,6 | – | – |

* Abweichendes Verfahren, siehe besondere Beschreibung

Bedeutung der Abkürzungen:
Emulg: Menge und Typ des Emulgators
APS: Ammoniumperoxodisulfat; W: Wasser ; BA: n-Butylacrylat; MMA: Methylmethacrylat
MAS: Methacrylsäure, Vernetz: Menge und Art des Vernetzungsmittels; TAC: Triallylcyanurat;
AL: Allylmethacrylat; Comon: Menge und Art des Comonomers, AN: Acrylnitril
EA: Ethylacrylat

Emulgator Typ A: Triisobutylphenol-7 EO,
          sulfatiert, Na-Salz
Emulgator Typ B: Isononylphenol-50 EO,
Emulgator Typ C: Nonylphenol- 9 EO/ 100 EO,
          Mischungsverhältnis 75 : 25
Emulgator Typ D: Octylphenol-16 EO

TABELLE 2: Zusammensetzung des Kern- und Schalenmaterials, jeweils in Gew.-% (Kurzbezeichnungen wie in Tabelle 1)

| Beisp. Nr. | Kernmaterial | | | | Schalenmaterial | | | Gew.-Verhältnis | |
|---|---|---|---|---|---|---|---|---|---|
| | BA | Comon. | Vernetz. | MAS | BA | MMA | MAS | Kern | Schale |
| 1 | 98,5 | – | 1 Tac | 0,5 | 57 | 40 | 3 | 70 | 30 |
| 2 | 99,3 | – | 0,2 AL | 0,5 | 57 | 40 | 3 | 70 | 30 |
| 3 | 99,2 | – | 0,3 AL | 0,5 | 57 | 40 | 3 | 70 | 30 |
| 4 | 98,9 | – | 0,6 AL | 0,5 | 57 | 40 | 3 | 70 | 30 |
| 5 | 98,5 | – | 1,0 AL | 0,5 | 57 | 40 | 3 | 70 | 30 |
| 6 | 99,2 | – | 0,3 AL | 0,5 | 57 | 40 | 3 | 80 | 20 |
| 7 | 99,2 | – | 0,3 AL | 0,5 | 57 | 40 | 3 | 70 | 30 |
| 8 | 99,2 | – | 0,3 AL | 0,5 | 57 | 40 | 3 | 65 | 35 |
| 9 | 99,2 | – | 0,3 AL | 0,5 | 65 | 33 | 2 | 80 | 20 |
| 10 | 69,2 | 30 MMA | 0,3 AL | 0,5 | 65 | 33 | 2 | 80 | 20 |
| 11 | 84,2 | 15 MMA | 0,3 AL | 0,5 | 65 | 33 | 2 | 80 | 20 |
| 12 | 99,2 | – | 0,3 AL | 0,5 | 65 | 32 | 3 | 70 | 30 |
| 13 | 99,2 | – | 0,3 AL | 0,5 | 70 | 27 | 3 | 70 | 30 |
| 14 | 93,2 | 6 AN | 0,3 AL | 0,5 | 65 | 33 | 2 | 80 | 20 |
| 15 | 84,2 | 15 MMA | 0,3 AL | 0,5 | 65 | 33 | 2 | 80 | 20 |
| 16 | 84,2 | 15 MMA | 0,3 AL | 0,5 | 65 | 33 | 2 | 80 | 20 |
| 17 | – | 99,2 EA | 0,3 AL | 0,5 | 45 EA | 52 | 3 | 70 | 30 |
| 18 | 73,8 | 24,6 MMA | 1,0 AL | 0,5 | 35 | 60 | 5 | 70 | 25 |
| | | | | | 35 | 50 | 15 | | 5 |

Anwendungstechnische Prüfüng

A. Bestimmung des mittleren Teilchendurchmessers der unimodalen Kunststoffdispersionen durch Autokorrelationsspektroskopie;

Meßgerät Nanosizer, WZ Coulter Electronics Ltd. Im Falle der bimodalen Kunststoffdispersion nach Beispiel 16 durch Ultrazentrifugenmessung nach Scholtan und Lange, Kolloidzeitschrift und Zeitschrift für Polymere, Band 250 (1972), S. 782.

B. Herstellung und Prüfung einer Anstrichfarbe 1000 Gew.-Teilen der Anstrichfarbe mit einem Festkörpergehalt von etwa 63 Gew.-% und einer Pigment-Volumen-Konzentration von etwa 30 % haben die nachfolgende Zusammensetzung (in Gew.-Teilen). Auf eingetragene Warenzeichen wird mit der Bezeichnung "WZ" und dem Namen des Herstellers hingewiesen.

92 Wasser

4 Dispergierhilfsmittel (ROHAGIT SL 252, WZ Röhm GmbH)

2 Konservierungsmittel (KM 101, WZ Riedel-de-Haen AG)

2 Entschäumer (NOPCO 8034, WZ Münzing Chemie GmbH)

190 Titandioxid Rutiltyp (Typ R-KB2, WZ, Farbenfabriken Bayer)

30 mikronisierter Glimmer (MICRO-MICA W1, WZ A/S Norwegian Talc)

30 Kieselgur (CELITE 281, WZ Johns-Manville Int.Corp.)

125 Schwerspat (EWO, WZ Sachtleben Chemie GmbH)

486 50%ige Kunststoffdispersion nach den Beisp. 1-16

8 Propylenglykol

8 Filmbildungshilfsmittel (LUSOLVAN FBH, WZ BASF AG)

15 Polyurethan-Verdickungsmittel, 10%ig in Wasser, (BORCHIGEL L 75, WZ Gebr. Borchers AG)

3 Stabilisierungsmittel AMP 90 (WZ Angus Chemie GmbH)

4 Verdickungsmittel (Rohagit SD15, WZ, Röhm GmbH)

C. Prüfung der Dehnbarkeit

Farben der unter A angegebenen Zusammensetzung werden in mehreren Schichten auf Glasplatten aufgetragen, die mit Teflonfolie beschichtet sind. Im getrockneten Zustand beträgt die Dicke des Anstriches 0,7 mm. Nach einer 8-tägigen Trocknung bei 23°C werden die Anstriche 2 Wochen in entsalztem Wasser und anschließend in einer Atmosphäre von 23°C und 50 % rel. Feuchte bis zur Gewichtskonstanz gelagert.

Aus den so hergestellten Anstrichfilmen werden 15 x 70 mm große Streifen geschnitten und auf einer Länge von 50 mm frei eingespannt. In einer Zugprüfmaschine werden die Streifen mit einer Geschwindigkeit von 50 mm/min bei einer Temperatur von -10°C gedehnt und das Zug-Dehnungs-Diagramm gemäß DIN 53 455 aufgenommen. Die ermittelte Kältedehnbarkeit (Epsilon-R/-10°C) wird in % angegeben. Wird die gleiche Messung an einem aus der reinen Kunststoffdispersion hergestellten unpigmentierten Film bei Raumtemperatur vorgenommen, so wird das Ergebnis als Dehnbarkeit (Epsilon-R/23°C) bezeichnet.

D. Prüfung der Blockfestigkeit der erzeugten Anstriche. Zur Ermittlung des Blockpunktes wird ein schwach saugendes Papier mittels eines 0,5 mm-Ziehlineals mit der unter A beschriebenen Farbe beschichtet und 16 Stunden bei Raumtemperatur und weitere 3 Stunden bei 60°C getrocknet.

Aus dem beschichteten Papier werden 25 x 170 mm große Streifen geschnitten, in der Mitte so gefaltet, daß die beschichteten Seiten aufeinanderliegen, und eine Stunde bei verschiedenen Temperaturen mit einer Belastung von 50 g/qcm gepreßt. Als Blockpunkt wird die höchste Temperatur bezeichnet, bei der sich die Beschichtungen noch ohne Beschädigung der Oberfläche voneinander trennen lassen.

E. Herstellung und Prüfung eines Ledergrundlackes Zusammensetzung (in Gewichtsteilen):

250 Kunststoffdispersion nach Beispiel 17, pH 7,4, 40 %ig

520 Wasser

40 Caseinlösung (RODA top 902, WZ Röhm GmbH)

30 Wachsemulsion (RODA mod W702, WZ Röhm GmbH)

100 Pigmentdispersion (RODA cor 132, WZ Röhm GmbH)

50 Penetrator (RODA mod P735, WZ Röhm GmbH)

Diese Zubereitung wird durch zweimaligen Spritzauftrag auf vollnarbiges Schuhoberleder appliziert. Dann wird bei 70°C und einem Druck von 150 bar gebügelt und anschließend noch zweimal die gleiche Grundierung aufgespritzt. Das fertig grundierte Leder wird ohne Schlußlackierung der anwendungstechnischen Prüfung unterzogen. Beim Bügeln mit einem Metallstempel von 120°C wird die Oberfläche nicht geschädigt. Das Leder ist ohne Blocken stapelbar. Die Knickprüfung mit dem Bally-Flexometer ergibt 20 000 Knickungen des nassen Leders und 50 000 Knickungen des trockenen Leders bis zum Beginn der Schädigung. Bei der Reibechtheitsprüfung nach Veslic mit einem mit 1 kg/qcm belasteten Filzstempel verträgt das trockene Leder jeweils 150 Reibhübe mit dem trockenen und dem nassen Filz. Das nasse Leder übersteht 150 Reibhübe mit dem trockenen Filz.

TABELLE 3: Physikalische Eigenschaften der Kunststoffdispersionen

| Beisp. Nr. | Glastemperatur Kern (Grad C) | Glastemperatur Schale (Grad C) | Feststoffgehalt (Gew.-%) | Teilchendurchmesser (nm) | Viskosität (mPa s) | Dehnbarkeit in % bei 23 Grad C unpigm. | Dehnbarkeit in % bei -10 Grad C pigm. | Blockpunkt des pigmentierten Films (Grad C) |
|---|---|---|---|---|---|---|---|---|
| 1 | -44 | 2 | 50 | 185 | 9 600 | - | 250 | 90 |
| 2 | -44 | 2 | 50 | 165 | 1 950 | - | 240 | 40 |
| 3 | -44 | 2 | 50 | 190 | 925 | - | 260 | 90 |
| 4 | -43 | 2 | 50 | 170 | 1 450 | - | 130 | 90 |
| 5 | -43 | 2 | 50 | 160 | 1 825 | - | 90 | 90 |
| 6 | -44 | 2 | 50 | 150 | 47 500 | 1 900 | 180 | 60 |
| 7 | -44 | 2 | 50 | 160 | 10 000 | 1 000 | 120 | 90 |
| 8 | -44 | -9 | 50 | 180 | 33 500 | 840 | 65 | 90 |
| 9 | -44 | -9 | 50 | 200 | 600 | - | 210 | 90 |
| 10 | -14 | -9 | 50 | 160 | 4 400 | 1 310 | 150 | 90 |
| 11 | -30 | -9 | 50 | 150 | 5 600 | - | 240 | 90 |
| 12 | -44 | -14 | 50 | 175 | 900 | 1 630 | 195 | 90 |
| 13 | -44 | -9 | 50 | 180 | 850 | 940 | 180 | 90 |
| 14 | -39 | -9 | 50 | 195 | 600 | - | 190 | 90 |
| 15 | -30 | -9 | 60 | 485 | 820 | - | 146 | 90 |
| 16 | -30 | 36 | 60 | bimodal | 1 100 | - | 261 | 90 |
| 17 | -19 | 35/35-40 | 40 | 86 | 2 000 | - | - | - |
| 18 | -18 | | 40 | 100 | 16 000 | 490 | - | - |

## Patentansprüche

1. Wäßrige Kunststoffdispersion mit einer Mindestfilmbildungstemperatur unter 50 °C, enthaltend ein Emulsionspolymerisat mit schalenförmigem Aufbau aus

A) 65 - 90 Gew.-% eines vernetzten Kernmaterials mit einer Glastemperatur unter 0 °C , aufgebaut aus

1) wenigstens einem monoäthylenisch ungesättigten, radikalisch polymerisierbaren Monomer, dessen Homopolymerisat eine Glastemperatur unter 25 °C hat,

2) mindestens einem vernetzenden Monomer, das wenigstens zwei äthylenisch ungesättigte, radikalisch polymerisierbare Gruppen enthält,

3) gegebf. zum verbleibenden Teil damit mischpolymerisierbaren, monoäthylenisch ungesättigten, nicht vernetzungsfähigen Comonomeren und

B) 35 - 10 Gew.-% eines im wesentlichen unvernetzten Schalenmaterials mit einer Glastemperatur unter 60 °C, aufgebaut aus

1) wenigstens einem monoäthylenisch ungesättigten, radikalisch polymerisierbaren Monomer, dessen Homopolymerisat eine Glastemperatur unter 25 °C hat,

2) wenigstens einem monoäthylenisch ungesättigten, radikalisch polymerisierbaren Monomer, dessen Homopolymerisat eine Glastemperatur über 25 °C hat,

3) gegebf. zum verbleibenden Teil damit mischpolymerisierbaren, monoäthylenisch ungesättigten Monomeren, wobei die Glastemperatur des Kernmaterials um mindestens 10 K unter der des Schalenmaterials liegt und am Aufbau des Schalenmaterials nicht mehr als 20 Gew.-% an polaren Monomeren aus der Gruppe der ungesättigten Carbonsäuren und der Hydroxyalkylester der Acryl- und/oder Methacrylsäure beteiligt sind.

2. Wäßrige Kunststoffdispersion nach Anspruch 1, dadurch gekennzeichnet, daß der Anteil des vernetzenden Monomeren in dem Kernmaterial so begrenzt ist, daß die Dehnbarkeit (nach DIN 53 455) mindestens 150 % beträgt.

3. Wäßrige Kunststoffdispersion nach Anspruch 2, dadurch gekennzeichnet, daß der Anteil des vernetzenden Monomeren in dem Kernmaterial so begrenzt ist, daß die Dehnbarkeit (nach DIN 53 455) mindestens 600 % beträgt.

4. Wäßrige Kunststoffdispersion nach einem oder mehreren der Ansprüche 1 bis 3, dadurch gekennzeichnet, daß das am Aufbau des Kernmaterials beteiligte vernetzende Monomer wenigstens zwei äthylenisch ungesättigte, radikalisch polymerisierbare Gruppen und darunter wenigstens eine Allylgruppe enthält.

5. Wäßrige Kunststoffdispersion nach einem oder mehreren der Ansprüche 1 bis 4, gekennzeichnet durch einen Gehalt an Pigmenten.

6. Verwendung der wäßrigen Kunststoffdispersion nach den Ansprüchen 1 - 5 als Beschichtungsnmittel zur Herstellung nicht blockender Überzüge.

7. Verwendung der wäßrigen Kunststoffdispersion gemäß Anspruch 1 zum Beschichten von Leder.

8. Verwendung der wäßrigen Kunststoffdispersion gemäß Anspruch 5 als Fassadenfarbe, insbesondere für Armierungsfarben.

9. Verfahren zur Herstellung einer wäßrigen Dispersion eines Emulsionspolymerisats gemäß wenigstens einem der Ansprüche 1 bis 5 durch Emulsionspolymerisation in zwei Stufen, wobei in der ersten Stufe 65 bis 90 Gew.-Teile eines Monomerengemisches, das gegebenenfalls in Wasser dispergiert sein kann, enthaltend

1) wenigstens ein monoäthylenisch ungesättigtes, radikalisch polymerisierbares Monomer, dessen Homopolymerisat eine Glastemperatur unter 25 °C hat,

2) mindestens ein pfropfvernetzendes Monomer, das wenigstens zwei äthylenisch ungesättigte, radikalisch polymerisierbare Gruppen und darunter wenigstens eine Allylgruppe enthält, und

3) gegebf. zum verbleibenden Teil damit mischpolymerisierbare, monoäthylenisch ungesättigte, nicht vernetzungsfähige Comonomere,

unter Polymerisationsbedingungen zu einer Wasserphase, die ein Emulgiermittel und einen radikalbildenden Initiator enthält, zulaufen läßt und in der zweiten Stufe zu dem entstandenen Latex weiterhin unter Polymerisationsbedingungen 35 bis 10 Gew.-Teile eines Monomerengemisches, das gegebenenfalls in Wasser emulgiert ist, aus

EP 0 387 664 B1

1) wenigstens einem monoäthylenisch ungesättigten, radikalisch polymerisierbaren Monomer, dessen Homopolymerisat eine Glastemperatur unter 25 °C hat,
2) wenigstens einem monoäthylenisch ungesättigten, radikalisch polymerisierbaren Monomer, dessen Homopolymerisat eine Glastemperatur über 25 °C hat, und
3) gegebf. zum verbleibenden Teil damit mischpolymerisierbare, monoäthylenisch ungesättigte Monomere,

zulaufen läßt, wobei die Komponenten des Kern- und des Schalenmaterials so gewählt werden, daß die Glastemperaturen des Kernmaterials unter 0 °C, des Schalenmaterials unter 60 °C und die erstere mindestens 10 K unter der letzteren liegt, und an dem Monomerengemisch der zweiten Stufe nicht mehr als 20 Gew.-% an polaren Monomeren aus der Gruppe der ungesättigten Carbonsäuren, und der Hydroxyalkylester der Acryl- und/oder Methacrylsäure beteiligt sind.

**Claims**

1.  An aqueous plastics dispersion with a minimum film-forming temperature below 50 °C, consisting of an emulsion polymer with a shell-like construction, containing

    A) 65 - 90 wt.% of a cross-linked core material with a glass transition temperature below 0 °C, synthesised from
    1) at least one monoethylenically unsaturated, radically polymerisable monomer, the homopolymer of which has a glass transition temperature below 25 °C,
    2) at least one cross-linked monomer which contains at least two ethylenically unsaturated, radically polymerisable groups,
    3) optionally, for the remaining part, monoethylenically unsaturated, non-cross-linking comonomers which may be copolymerised therewith, and

    B) 35 - 10% of a largely non-cross-linked shell material having a glass transition temperature below 60 °C, synthesised from
    1) at least one monethylenically unsaturated, radically polymerisable monomer, the homopolymer of which has a glass transition temperature below 25 °C,
    2) at least one monoethylenically unsaturated, radically polymerisable monomer, the homopolymer of which has a glass transition temperature above 25 °C,
    3) optionally, for the remaining part, monoethylenically unsaturated monomers which may be copolymerised therewith,

    the glass transition temperature of the core material being at least 10 K below that of the shell material, and the shell material being synthesised from not more 20 wt.% of polar monomers from the group of unsaturated carboxylic acids and hydroxy alkyl esters of acrylic and/or methacrylic acid.

2.  An aqueous plastics dispersion according to claim 1, characterised in that the amount of the cross-linked monomer in the core material is limited so that the elasticity (according to DIN 53 455) is at least 150%.

3.  An aqueous plastics dispersion according to claim 2, characterised in that the amount of the cross-linked monomer in the core material is limited so that the elasticity (according to DIN 53 455) is at least 600%.

4.  An aqueous plastics dispersion according to one or more of claims 1 to 3, characterised in that the cross-linked monomer from which the core material is partly synthesised contains at least two ethylenically unsaturated, radically polymerisable groups, at least one of which is an allyl group.

5.  An aqueous plastics dispersion according to one or more of claims 1 to 4, characterised in that it contains pigments.

6.  Use of the aqueous plastics dispersion according to claims 1 to 5 as a coating agent for producing non-blocking coats.

7.  Use of the aqueous plastics dispersion according to claim 1 for coating leather.

8.  Use of the aqueous plastics dispersion according to claim 5 as façade wall paint, more particularly as armour paint.

12

9.  A process for producing an aqueous dispersion of an emulsion polymer according to at least one of claims 1 to 5 by emulsion polymerisation in two stages, in which in the first stage 65 to 90 parts by weight of a monomer mixture which may, optionally, be dispersed in water, containing

1) at least one monoethylenically unsaturated, radically polymerisable monomer, the homopolymer of which has a glass transition temperature below 25°C,

2) at least one monomer cross-linked by grafting which contains at least two ethylenically unsaturated, radically polymerisable groups, at least one of which is an allyl group,

3) optionally, for the remaining part, monoethylenically unsaturated, non-cross-linking comonomers copolymerisable therewith,

are fed, under polymerisation conditions, to an aqueous phase which contains an emulsifier and a radical-forming initiator, and in the second stage, also under polymerisation conditions, 35 to 10 parts by weight of a monomer mixture which may, optionally, be emulsified in water, containing

1) at least one monethylenically unsaturated, radically polymerisable monomer, the homopolymer of which has a glass transition temperature below 25°C

2) at least one monethylenically unsaturated, radically polymerisable monomer, the homopolymer of which has a glass transition temperature above 25°C,

3) optionally, for the remaining part, monoethylenically unsaturated monomers copolymerisable therewith,

are fed to the latex obtained, the components of the core and shell material being chosen such that the glass transition temperatures of the core materials are below 0°C, those of the shell materials are below 60°C and the former is at least 10 K below the latter, and the monomer mixture of the second stage being synthesised from not more than 20 wt.% of polar monomers from the group of unsaturated carboxylic acids and the hydroxy alkyl esters of acrylic and/or methacrylic acid.

## Revendications

1.  Dispersion aqueuse de matières plastiques ayant une température minimale de formation de film inférieure à 50°C, contenant un polymère obtenu par polymérisation en émulsion à structure en forme de coque, de

A) 65 - 90 % en poids d'un matériau de coeur réticulé ayant une température de transition vitreuse inférieure à 0°C, constitué de :

1) au moins un monomère polymérisable par voie radicalaire, à insaturation monoéthylénique, dont l'homopolymère présente une température de transition vitreuse inférieure à 25°C,

2) au moins un monomère réticulant contenant au moins deux groupes à insaturation éthylénique polymérisables par voie radicalaire,

3) le cas échéant, pour la partie restante, des comonomères non réticulables à insaturation éthylénique et copolymérisables avec les précédents, et

B) 35 - 10 % en poids d'un matériau de coque essentiellement non réticulé ayant une température de transition vitreuse inférieure à 60°C, constitué de :

1) au moins un monomère polymérisable par voie radicalaire, à insaturation monoéthylénique, dont l'homopolymère présente une température de transition vitreuse inférieure à 25°C,

2) au moins un monomère polymérisable par voie radicalaire, à insaturation monoéthylénique, dont l'homopolymère présente une température de transition vitreuse supérieure à 25°C,

3) le cas échéant, pour la partie restante, des monomères insaturés en monoéthylène polymérisables en mélange avec les précédents, et

la température de transition vitreuse du matériau de coque étant inférieure d'au moins 10 K à celle du matériau de coque, et pas plus de 20 % en poids de monomères polaires du groupe des acides carboxyliques insaturés et des esters hydroxyalkyliques de l'acide acrylique et/ou méthacrylique ne participant à la structure du matériau de coque.

2.  Dispersion aqueuse de matières plastiques selon la revendication 1, caractérisée en ce que la proportion des monomères réticulants dans le matériau de coeur est limitée de telle sorte que l'extensibilité (selon DIN 53 455) vaut au moins 150 %.

3.  Dispersion aqueuse de matières plastiques selon la revendication 2, caractérisée en ce que la proportion des monomères réticulants dans le matériau de coeur est limitée de telle sorte que l'extensibilité (selon DIN 53 455) vaut au moins 600 %.

**4.** Dispersion aqueuse de matières plastiques selon l'une quelconque des revendications 1 à 3, caractérisée en ce que le monomère réticulant participant à la structure du matériau de coeur contient au moins deux groupes polymérisables par voie radicalaire, à insaturation éthylénique, et parmi eux au moins un groupe allyle.

**5.** Dispersion aqueuse de matières plastiques selon l'une ou plusieurs des revendications 1 à 4, caractérisée par une teneur en pigments.

**6.** Utilisation de la dispersion aqueuse de matières plastiques selon les revendications 1 à 5 comme agent d'enduction pour la fabrication de revêtements non bloquants.

**7.** Utilisation de la dispersion aqueuse de matières plastiques selon la revendication 1 pour l'enduction du cuir.

**8.** Utilisation de la dispersion aqueuse de matières plastiques selon la revendication 5 comme peinture pour façades, en particulier pour des peintures d'armatures.

**9.** Procédé de fabrication d'une dispersion aqueuse d'un polymère obtenu par polymérisation en émulsion selon au moins l'une des revendications 1 à 5, par polymérisation en émulsion en deux étapes, dans lequel, dans la première étape, on laisse s'écouler dans des conditions de polymérisation dans une phase aqueuse qui contient un émulsifiant et un amorceur radicalaire, 65 à 90 parties en poids d'un mélange de monomères, qui peut éventuellement être dispersé dans l'eau, contenant

1) au moins un monomère polymérisable par voie radicalaire, à insaturation monoéthylénique, dont l'homopolymère présente une température de transition vitreuse inférieure à 25 °C,

2) au moins un monomère réticulant par greffage contenant au moins deux groupes à insaturation éthylénique polymérisables par voie radicalaire, et parmi eux au moins un groupe allyle,

3) le cas échéant, pour la partie restante, des comonomères non réticulables à insaturation monoéthylénique et copolymérisables avec les précédents,

et, dans la deuxième étape, on laisse s'écouler dans le latex obtenu, de nouveau dans des conditions de polymérisation, 35 - 10 parties en poids d'un mélange de monomères éventuellement mis en émulsion dans l'eau, constitué de :

1) au moins un monomère polymérisable par voie radicalaire, à insaturation monoéthylénique, dont l'homopolymère présente une température de transition vitreuse inférieure à 25 °C,

2) au moins un monomère polymérisable par voie radicalaire, à insaturation monoéthylénique, dont l'homopolymère présente une température de transition vitreuse supérieure à 25 °C,

3) le cas échéant, pour la partie restante, des monomères à insaturation monoéthylénique copolymérisables avec les précédents,

les composants du matériau de coeur et du matériau de coque étant choisis de telle manière que la température de transition vitreuse du matériau de coeur est inférieure à 0 °C, celle du matériau de coque est inférieure à 60 °C, et la première est inférieure d'au moins 10 K à la dernière, et pas plus de 20 % en poids de monomères polaires du groupe des acides carboxyliques insaturés et des esters hydroxyalkyliques de l'acide acrylique et/ou méthacrylique ne participent au mélange de monomères de la deuxième étape.

14